# EUROPEAN PATENT SPECIFICATION

(11) **EP 2 824 822 B1**
(45) Date of publication and mention of the grant of the patent: **03.05.2017**
(21) Application number: 13175753.6
(22) Date of filing: 09.07.2013
(51) Int. Cl.: H02M 7/49, H01F 38/14

(54) **A power transmission and distribution system supplying a plurality of subsea loads**
Stromversorgungs- und Verteilungssystem zur Speisung mehrerer unterseeischer Lasten
Système de transmission et de distribution d'énergie fournissant une pluralité de charges sous-marines

(43) Date of publication of application: 14.01.2015
(73) Proprietor: ABB Schweiz AG, 5400 Baden (CH)
(72) Inventor: Kolstad, Helge, 0586 Oslo (NO); Wiik, Jan, 0575 Oslo (NO); Hyttinen, Mats, 771 42 Ludvika (SE); Moen, Tor-Eivind, 1397 Nesøya (NO); Piasecki, Wojciech, 30-009 Krakow (PL); Szewczyk, Marcin, 03-982 Warsaw (PL)
(74) Representative: Savela, Reino Aleksi

(56) References cited:
- EP-A1- 2 290 799
- EP-A1- 2 293 407
- EP-A1- 2 447 962
- GB-A- 2 458 476
- US-A1- 2013 026 831
- SONG-MANGUELLE J ET AL: "A Modular Stacked DC transmission and distribution system for long distance subsea applications", ENERGY CONVERSION CONGRESS AND EXPOSITION (ECCE), 2012 IEEE, IEEE, 15 September 2012 (2012-09-15), pages 4437-4444, XP032467049, DOI: 10.1109/ECCE.2012.6342218 ISBN: 978-1-4673-0802-1
- P. MONJEAN ET AL: "Topologies comparison of multi-cell medium frequency transformer for offshore farms", 9TH IET INTERNATIONAL CONFERENCE ON AC AND DC POWER TRANSMISSION (ACDC 2010), 1 January 2010 (2010-01-01), pages O44-O44, XP055107200, DOI: 10.1049/cp.2010.0979 ISBN: 978 1 84919 308 5

## Description

A power transmission and distribution system supplying a plurality of subsea loads.

### TECHNICAL FIELD.

The present invention is concerned with a modular power transmission and distribution system for subsea use. In particular it is concerned with a system of electrical power distribution installed subsea for supplying a plurality of electrical loads used in applications and equipment for oil and gas extraction, production, processing or transportation.

### TECHNICAL BACKGROUND

Distribution of electrical power to subsea equipment is currently under development. One of the important drivers is the need for power transmission to distant subsea loads. This might require solutions with HVDC to avoid the effects of large capacitive currents associated with long distance AC supplies. A traditional HVDC system would use a rectifier to convert a topside / onshore AC voltage to DC, then transmit the DC-current through a cable, and convert the supply to an AC-voltage at the subsea end of the cable.

US20100133901, entitled Modular stacked subsea power system architectures, and assigned to General Electric, describes a sub-sea power delivery system including a plurality of modular power converter building blocks on each of the power source side. The power delivery system comprises a system with a DC transmission link/bus, wherein the system DC link is configured to carry HVDC or MVDC power from an onshore utility or topside power source to multiple sub-sea load modules. An embodiment is described in which a number of DC/AC converters on the load side are connected in series.

There are two general approaches to packaging electrical and electronic equipment for use subsea or on the seabed at considerable depths. The first approach is to use a rigid sealed enclosure that is strong enough to withstand the pressure of say 300 bar. Such enclosures are very large and very heavy and they present difficulties both for shipping to site and in installing on the seabed. The second approach is to use some kind of pressure compensated enclosure which transfers the external hydrostatic pressure to the components inside a lighter, less rigid enclosure.

However, even with pressure-compensated enclosures the size and weight presents challenges in terms of shipping the equipment out to sea. Deliveries to platforms and oil fields out to sea are usually made using eg oil field support ships which have limited deck space and cargo handling equipment. Large and heavy enclosures also are awkward and difficult to handle when installing equipment on the seabed using remotely operated vehicles (ROVs), for example to maneuver, position and connect different sections of equipment to one another in a system. Thus there is a need to reduce both the size and the weight of equipment used for subsea installations.

Connecting devices together is another technical challenge in subsea installations. Wet mate connectors and penetrators are frequently used in the oil and gas industry to connect devices together underwater. However, these devices are particularly expensive and at the same time often also subject to failure.

### SUMMARY OF THE INVENTION

The aim of the present invention is to remedy one or more of the above mentioned problems. This and other aims are obtained by a system characterised by claim 1.

In a first aspect of the invention a power transmission and distribution system supplying a plurality of subsea loads, the system comprising a high voltage DC transmission cable on the power side connected to two or more subsea power supplies each comprising a bypass switch and a first DC/AC converter and a transformer; wherein at least one first DC/AC converter of at least one power supply is arranged in a first enclosure and connected to the one or more subsea loads by said transformer which comprises a primary winding and at least one secondary winding, wherein the transformer is operated at a medium frequency MF which is greater than 200Hz and less than 20kHz.

The present invention addresses one or more of the above technical challenges. The use of a medium frequency MF transformer configuration means that the transformer equipment is smaller in physical size. This fact, together with using a plurality of modular power supplies means that the reduced equipment size and weight that the resulting size and weight of equipment in each seawater proof enclosure or container is more easily handled. The equipment is more easily handled for shipping and also for installation on site and during future maintenance. The medium frequency MF is greater than a low frequency of, say 50 or 60Hz. The increased frequency configuration increases the bandwidth and power handling capacity of the transformer, relative to its physical size.

The modular design also confers redundancy and flexibility on the subsea power distribution system. With a modular HVDC station each DC/AC converter only handles a limited amount of the total power delivered. The modular design also offers a relatively simple way to extend the power supply to more loads with by reuse of 'building blocks' in the form of basic and reliable power supply units.

Another advantage of the system is the simple design of including a bypass switch in at least one power supply. This simple and reliable equipment in the first place allows equipment not needed, or equipment with a fault condition, to be switched off in a safe and quick way. Secondly the incorporation of bypass switches allows the configuration or re-configuration for redundancy options by, for example having at least two feeds controlled by bypass switches and supplying the same circuit. Thus if one power supply is not available then it can be switched out and power increased in the other power supplies to compensate.

The simple modular design disclosed by the present invention also does not require an HVDC transmission structure, with the necessary circuit breakers and or high capacity HVDC converters.

According to an embodiment, a power transmission and distribution system supplying a plurality of subsea loads is disclosed, said system comprising a high voltage DC transmission cable on the power side connected to two or more subsea power supplies each comprising a transformer, wherein said transformer is operated at a medium frequency MF which is greater than 200Hz and less than 20kHz.

According to an embodiment, a power transmission and distribution system supplying a plurality of subsea loads is disclosed, said system comprising a high voltage DC transmission cable on the power side connected to two or more subsea power supplies each comprising a transformer, wherein the at least first one DC/AC converter of at least one power supply is arranged to operate at a medium frequency MF greater than 200Hz and less than 20kHz.

According to an embodiment, a power transmission and distribution system supplying a plurality of subsea loads is disclosed, said system comprising a high voltage DC transmission cable on the power side connected to two or more subsea power supplies each comprising a transformer, wherein the at least one power supply comprises at least one AC/DC converter; and in another embodiment the at least one power supply comprises at least one second DC/AC converter. The system of this embodiment has the added advantage that the power loads are largely protected and isolated from any fluctuation in the incoming HVDC power supply by the AC/DC - DC/AC inverter-converter combination.

According to a preferred embodiment, a power transmission and distribution system supplying a plurality of subsea loads is disclosed, said system comprising a high voltage DC transmission cable on the power side connected to two or more subsea power supplies each comprising a transformer, where the primary winding is arranged in a first enclosure, and wherein the at least one second enclosure comprises at least one secondary winding, and the first enclosure and at least one second enclosure are arranged in close proximity to one another such that the primary windings and the secondary windings are inductively connected to one another.

According to a preferred embodiment, the transformer of the power supply is arranged as a split-core transformer. Modular power supplies handling a limited part of a total power being distributed also facilitates the use and efficiency of split-core transformers. Using a split-core transformer has the great advantage that each split core transformer can eliminate one penetrator or wet-mate connector. As previously noted, penetrators or wet-mate connectors are both a very expensive form of electrical connector and also a potential source of failure in an underwater circuit. As maintenance and repairs on the seabed are technically extremely difficult, as well as prohibitively expensive, the elimination of a penetrator which may be potential failure element is a significant advantage.

According to an embodiment, a power transmission and distribution system supplying a plurality of subsea loads is disclosed, said system comprising a high voltage DC transmission cable on the power side connected to two or more subsea power supplies each comprising a transformer, where the primary winding is arranged in a first enclosure, and wherein one or more of a DC/AC converter or an AC/DC converter are arranged inside at least one second enclosure, which enclosure is configured insulated for operation at a low (LV) or medium voltage (MV).

In addition, the split core transformer design may also be configured such that it provides for a clear separation between higher voltage insulation parts for the primary winding and second, lower or medium voltage insulation parts for the secondary winding(s). Thus a seawater proof enclosure for higher voltage equipment may be manufactured to a lesser and more easily handled size and weight because it only needs to house the primary side of the power supply. The higher voltage enclosure does not have to contain the secondary or load side of the power supply. The secondary windings and the two frequency converters making up the load side of a power supply can be housed in a lower or medium voltage enclosure, which in turn, as it contains a subset of the necessary equipment, may also be manufactured to be of smaller size and of a lower weight than would be required for a housing containing both primary and secondary side of a power supply. Such smaller or modular component enclosures are more easily accommodated on the decks or in the freight hold of an oil field utility or supply ship.

It should be noted that inductive couplers were discussed in an article entitled Hybrid Wet-mate Connectors: 'Writing the Next Chapter', Dr. James L. Cairns, published in Sea Technology July 1997; and found at the following Internet address: http://www.odi.com/odi documents/articles and papers/pdf/hybridwe t-mateconnectors.pdf This article primarily discusses wet-mate connectors in the oil industry, but also states in respect of inductive coupling (page 1) that "Another early wet-mate electrical design was the inductive coupler. A circuit through one of these connectors consisted of one conductive coil in each connector half, the two coils nesting together when mated. A fluctuating electrical signal in one coil induced a corresponding signal in the other. No conductive parts were exposed to the environment. The design was very attractive mechanically albeit somewhat large, but due to severe bandwidth and power limitations it never found widespread use."

In contrast to this earlier description asserting that inductive couplers have severe limitations in bandwidth and power characteristics, an embodiment of the present invention discloses an improved inductive coupler. This embodiment is preferably configured and operated at a frequency greater than a low frequency such that it overcomes the limitations on bandwidth and power previously described.

In an embodiment, the transformer is operated at a medium frequency MF which is greater than 400Hz and less than 10kHz. In another embodiment, the transformer is operated at a medium frequency MF which is between 800Hz and less than 1200kHz.

According to another embodiment, a power transmission and distribution system supplying a plurality of subsea loads is disclosed, said system comprising a high voltage DC transmission cable on the power side connected to two or more subsea power supplies each comprising a transformer, where the primary winding is arranged in a first enclosure, and wherein at least one primary winding connected to a DC/AC converter in the first enclosure and wound in a plane perpendicular to a longitudinal axis A is aligned co-axially with a secondary winding arranged connected to at least one AC/DC converter enclosed within one of the second enclosures. The primary winding and the secondary windings are arranged in separate enclosures which must be placed in close proximity to one another to reduce losses in the induced fields between the windings. By placing the primary and secondary coils in a co-axial relationship around the same long axis A the induced fields between windings may be optimised to reduce field losses.

According to another embodiment, a power transmission and distribution system supplying a plurality of subsea loads is disclosed, said system comprising a high voltage DC transmission cable on the power side connected to two or more subsea power supplies each comprising a transformer, where the primary winding is arranged in a first enclosure, wherein the one or more one primary windings of the transformer are arranged electrically connected to at least one DC/AC converter inside the first enclosure which one or more one primary windings are arranged on an outside wall of the first enclosure. Transmission losses generating an induced field between the primary and secondary windings are reduced in this embodiment in which the primary coil is arranged in the water on the outside of the first enclosure. A primary coil arranged on the outside of the first enclosure may be positioned closer to an enclosure containing a secondary coil than if it had been included inside the first enclosure, thus reducing the inductance gap and/or the field leakage. A suitably insulated winding thus arranged placed on the outside of the enclosure reduces field losses, thus improving efficiency of the inductive coupling.

According to another embodiment, a power transmission and distribution system supplying a plurality of subsea loads is disclosed, said system comprising a high voltage DC transmission cable on the power side connected to two or more subsea power supplies each comprising a transformer, where the primary winding is arranged in a first enclosure, wherein two or more power supplies each comprising at least one DC/AC converter and at least one MF transformer are arranged connected to supply one power load comprising one or more subsea power loads. In this embodiment one or more subsea loads are arranged with two power supplies such that power supply and flexibility is assured by a redundant arrangement wherein one power supply may be by-passed and the other power supply increased in rating if so required.

According to an embodiment, a power transmission and distribution system supplying a plurality of subsea loads is disclosed, said system comprising a high voltage DC transmission cable on the power side connected to two or more subsea power supplies each comprising a transformer, where the primary winding is arranged in a first enclosure, wherein the secondary winding of one or more transformers is arranged inside the second enclosure and connected by means of an insulated bushing device or penetrator accommodating one single electrical power conductor penetrating an external wall of the second enclosure and configured to conduct at least one phase of an AC supply to one or more subsea loads. In this way the number of penetrators required in a subsea distribution circuit may be minimized.

According to an embodiment, a power transmission and distribution system supplying a plurality of subsea loads is disclosed, said system comprising a high voltage DC transmission cable on the power side connected to two or more subsea power supplies each comprising a transformer, where the primary winding is arranged in a first enclosure, wherein the system comprises one or more control or protection circuits configured for operating at least one bypass switch and bypassing one or more power supplies comprising a DC/AC converter and a MF transformer from the HVDC cable supply. Flexibility of the distribution is provided by arranging bypass switches with each power supply so that changes in respect of which one or more power supply is connected to which one or more subsea loads may be made.

According to an embodiment, a power transmission and distribution system supplying a plurality of subsea loads is disclosed, said system comprising a high voltage DC transmission cable on the power side connected to two or more subsea power supplies each comprising a transformer, where the primary winding is arranged in a first enclosure, wherein the system comprises one or more control circuits or triggering mechanisms configured for operating at least one bypass switch when a circuit parameter or condition is detected which is at least one of: an over-voltage or over-current; a cable fault; a fault condition in a load; an fault of a DC/AC converter or a medium frequency transformer. By means of the present embodiment semiautomatic or automatic variation of which of the one or more power supplies is connected to which of the one or more subsea loads may be carried out in response to a control setpoint and/or to an alarm or protection threshold or setpoint.

According to a preferred embodiment, a power transmission and distribution system supplying a plurality of subsea loads is disclosed, said system comprising a high voltage DC transmission cable on the power side connected to two or more subsea power supplies each comprising a transformer, where the primary winding is arranged in a first enclosure, and wherein the first enclosure is a pressure compensated enclosure which comprises at least one of: a DC/AC frequency converter, a primary winding, a bypass switch. A pressure compensated first enclosure is preferred to a pressure resistant enclosure because the latter requires an extremely large, strong, rigid and therefore heavy enclosure. Such enclosures are difficult to transport to site, as well as difficult and expensive to handle, assemble or connect etc. on the seabed. Arranging the first enclosure with a passive pressure compensation device or mechanism enables a first HV enclosure that is smaller, lighter, more easily transported and more easily handled on the seabed. A similar benefit is provided by configuring the one or more secondary enclosures as pressure compensated enclosures in preference to pressure resistant enclosures.

In a second aspect of the invention a method for operating a power transmission and distribution system supplying a plurality of subsea loads is disclosed, the system comprising a high voltage DC transmission cable on the power side connected to two or more power supplies each arranged with a bypass switch and comprising a first DC/AC converter on the power side, and where at least one first DC/AC converter is connected to a transformer connected to supply one or more subsea power loads, wherein said system comprises at least one DC/AC converter of at least one power supply which is arranged in a first HV enclosure and connected to the one or more subsea loads by a transformer comprising a primary winding and at least one secondary winding, wherein the transformer is configured to operate at a medium frequency (MF) which is greater than 200Hz and less than 20kHz and preferably at a frequency greater than 400Hz and less than 10kHz, and by the step of operating at least one bypass switch and disconnecting or connecting one or more power supplies comprising a DC/AC converter and a MF transformer from the HVDC cable supply.

The second aspect of the invention clearly discloses the advantage of the modular power distribution system which comprises bypass switches that may be used for disconnecting and connecting power supplies to the one or more loads. In this way and by using robust and reliable equipment the power distribution system may be configured with redundancy in the power supply, and/or adapted as required when an equipment does not need to be operated, or when an equipment has a fault condition.

According to a third aspect a computer program configured for operating a system for electrical power transmission and distribution to a plurality of subsea loads is disclosed. The computer program comprises computer program code which, when run on a controller, control unit or control and protection unit, causes the controller to perform a method according to the second aspect.

According to a fourth aspect of the invention a computer program product configured for operating a system for electrical power transmission and distribution to a plurality of subsea loads is disclosed. The computer program product comprises computer program code which, when run on a controller, control unit or control and protection unit, causes the controller to perform a method according to the second aspect.

It is to be noted that any feature of the first aspect may be applied to the second aspect and the third aspect, wherever appropriate. Likewise, any advantage of the first aspect may equally apply to the second aspect, and/or the third aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

A more complete understanding of the method and system of the present invention may be had by reference to the following detailed description when taken in conjunction with the accompanying drawings wherein:
Figure 1 shows a block diagram of a modular distribution bus system providing electric power to a plurality of power supplies for subsea loads, which modular distribution bus is supplied by a DC cable according to a first aspect of the invention;
Figure 2 shows the invention of Figure 1 and in particular an embodiment in which a plurality of power supplies are connected to a single subsea power load;
Figure 3 is a schematic flowchart illustrating methods for operating the invention of Figure 1 according to a second aspect of the invention of Figure 1;
Figure 4a is a block diagram of a physical arrangement of the modular distribution bus of Figure 1, and/or Figure 2, showing in particular a topology with primary and secondary windings arranged co-axially to one another and in which elements of the invention of Figures 1 are encapsulated, and where Figure 4b shows in particular a topology in which elements of the invention of Figures 1 are encapsulated and where a primary winding element is arranged on the outside of an enclosure according to an embodiment;
Figure 5 is a block diagram showing embodiments of the invention of Figure 1 and showing in particular power supplies which are arranged with one or more capacitor and/or inductor elements according to one or more embodiments;
Figure 6a is a block diagram of a physical arrangement of the modular distribution bus of Figure 1 and showing in particular a primary winding connected to encapsulated converter on the primary side wherein the primary winding is arranged outside the encapsulation of the converter; Figure 6b shows the invention of Figure 1 and with primary and secondary windings arranged co-axially to one another and in particular showing a secondary winding arranged in a second encapsulation which second encapsulation is arranged to surround part of the primary winding, according to an embodiment;
Figure 7 is a schematic flowchart illustrating methods for operating the invention of Figure 1 according to the second aspect of the invention of Figure 1;
Figure 8 schematically shows a computer program product comprising computer readable code which implements the method according a fourth aspect of the invention of Figure 1 when loaded into a computer; and
Figure 9 is a schematic representation of a primary winding of the invention of Figure 1, shown in cross section and lying in a horizontal plane.

### DESCRIPTION OF THE PREFERRED EMBODIMENTS

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention.

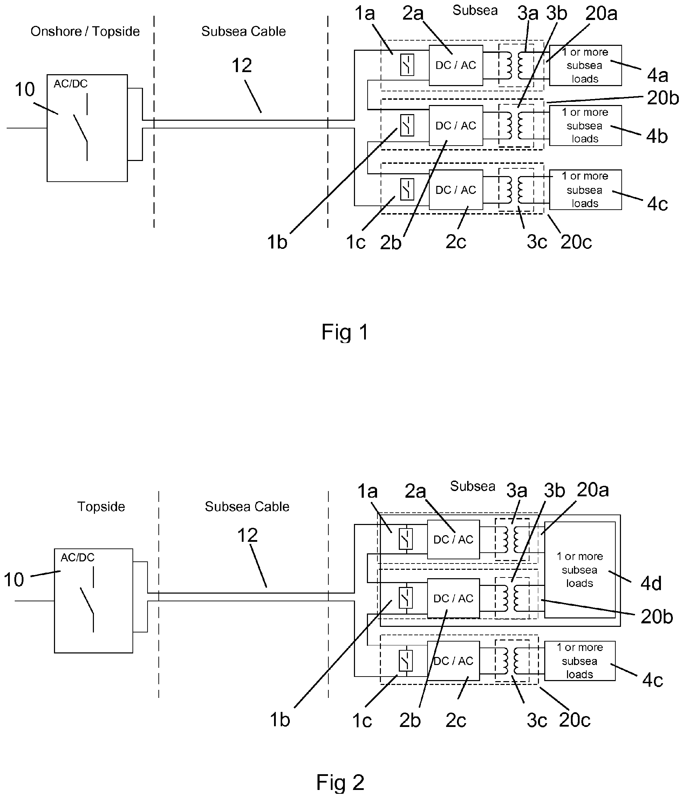

Figure 1 shows a topside or onshore rectifier 10 connected for supplying DC current to a multiple of subsea loads 4a-d through a long cable 12. The multiple subsea loads may be arranged as a plurality of subsea loads. The topside or onshore rectifier 10 is connected by the long DC cable 12 to three power supplies 20a-c. Each power supply is also connected with a bypass switch 1a-1c so that one or more of the power supplies may be simply dis-connected when so required. The voltage rise in the healthy loads, meaning power loads that are operating as planned, can be addressed by an onshore voltage or current source control.

In a first power supply a DC/AC converter 2a is arranged connected to a transformer 3a. Transformer 3a is in turn inductively connected to one or more subsea power loads 4a. Figure 1 shows three such power supplies 2a-2c each connected to a power load 4a-c by means of a transformer 3a-c. The DC/AC converters 2a-c are advantageously designed and configured to operate at a relatively high frequency of between 200 Hz to around 20kHz and supply AC power to transformers 3a-c which are designed and configured as medium frequency (MF) transformers. This has the benefit of reducing the physical size of the transformers 3a-c relative to the power load supplied.

The subsea loads are connected in series to the DC-link. As noted above, each subsea load has a bypass switch 1a-c that can be used to bypass the given load when not in operation or if in a faulty condition. The bypass switches may be operated by a local control unit (not shown in figures) or logic circuit or control and protection unit or other triggering device in the subsea distribution system. For example a transient-voltage-suppression (TVS) diode may be used to protect devices from voltage spikes. Such voltage spikes may occur due to induction on connected wires during operational events in nearby equipment. A circuit with a solid-state switch or a transient voltage suppression diode, such as a transil circuit normally operates by shunting excess current when the induced voltage exceeds an avalanche breakdown potential. It may be a clamping device, suppressing all overvoltages above its breakdown voltage, which also switches off the shunt or crowbar when the excess voltage is no longer present. The bypass switches may also or instead be operated by remote signals from a control unit or control and protection unit (not shown) topside or onshore.

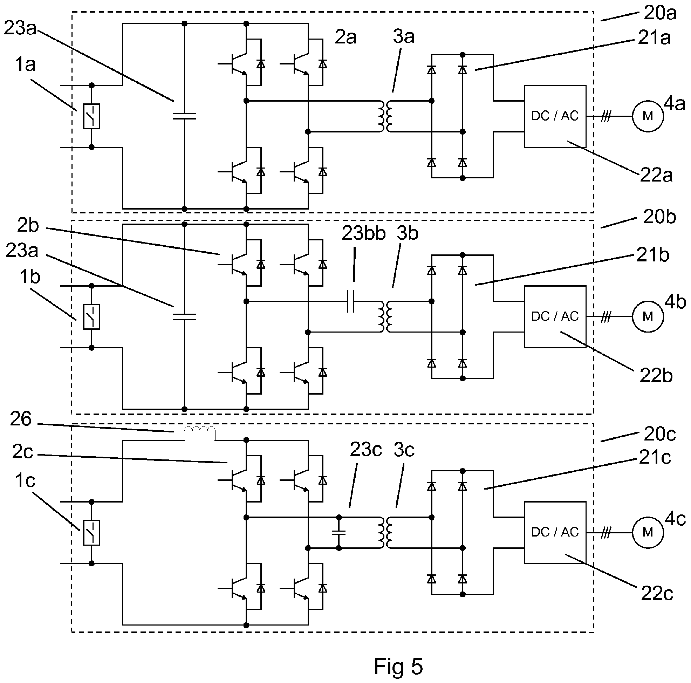

It may be advantageous to arrange the bypass switch circuit so as to limit a peak current caused by closing the switch, or to limit a peak current in excess of a predetermined value. In this case an inductor or resistor may be added in the circuit in series, and the closing of the bypass switch may be carried out as a two-step closing manoeuvre. This is indicated in Figure 5, with power supply 20c having a resistor/inductor 26 as also described below.

One or more of the bypass switches 1a-c may comprise at least one of: a mechanical by-pass; a solid-state switch a thyristor by-pass; a combination of both; a mechanical by-pass and a thyristor by-pass connected in parallel. The voltage rise in the healthy loads can be addressed by the onshore voltage or current source control. The DC/AC converter 2a is used to produce a high frequency that is used to supply a medium frequency transformer 3a. The medium frequency transformer 3a isolates the subsea loads from the HVDC link, thus reducing the insulation requirements of the subsea load or loads. Preferably the medium frequency transformer 3a-c is a spit-core transformer, as described in detail below.

The modular arrangement of, in this case, three power supplies 20a-c arranged to supply three groups of one or more subsea loads 4a-c provides the benefit in the subsea environment of ease of handling, particularly in a transportation, construction, testing or maintenance phase.

Figure 2 shows an embodiment in which a plurality of power supplies are connected to a single subsea power load or group of loads. The figure shows the three power supplies 20a-c as in Figure 1, where each power supply comprises a bypass switch 1a-c, a DC/AC converter 2a-c and a transformer 3a-c. In this embodiment two power supplies 20a, 20b are connected to supply a group of one or more subsea loads 4d. A second one or more subsea loads 4c is supplied by power supply 20c. In this embodiment of the system, two (or more) power supplies 20a, 20 b are connected in series on the HVDC link are used to supply power to the same load (or group of loads). This gives the potential to increase the maximum power to one load or group of loads, as well as, or instead of having redundancy in the supply. In the case when two (or more) power supplies are used to supply power to the same load, each of the supply is rated for a portion of the load power. The lower power requirement on a power supply 20a-c also means that a split core transformer, and in particular one with a higher frequency such as a or medium frequency split core transformer, would be more feasible.

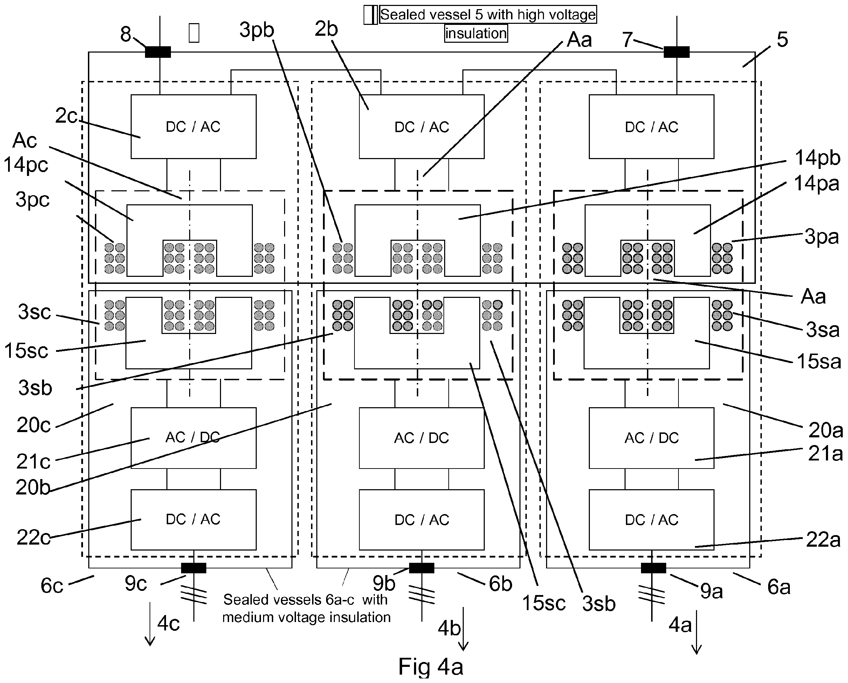

Figure 4a shows a schematic diagram for a physical arrangement of the modular distribution system of Figure 1 (and/or Figure 2). The figure shows a first enclosure 5 which contains the power side or primary side of three power supplies 20a-c in which the three transformers 3a-c are arranged as split-core transformers. Enclosure 5, which is operated at higher voltage and is suitably insulated for HV use at voltages higher than 10kV or more, contains the primary side of power supply 20a. Power supply 20a, indicated as components in a box drawn around them with dashed lines (- - -) comprises in enclosure 5 the DC/AC converter 2a and a primary side winding 3pa of the transformer shown 3a in Figures 1 and 2. The primary winding may also be arranged with a core 14pa or else may be arranged without such a core. Thus in an embodiment at least the primary winding 3pa is arranged with a core 14pa. In another embodiment, at least the primary winding 3pa is not arranged with a core. In enclosure 5, the DC/AC converter 2a receives HV DC power from an insulated conductor passing through a bushing or a penetrator 7 which is arranged fixed in a wall of the enclosure 5. Enclosure 5 may contain a plurality of power supplies, and Figure 4a shows the primary part of two other power supplies 20b, 20c.

Figure 4a also shows the load side of three power supplies 20a-c, and in this embodiment each load side or secondary side of the power supplies 20a-c is arranged in a separate enclosure 6a-c. The second enclosures are not operated at a higher voltage and are therefore constructed and insulated for operations at a low (LV) or a voltage lower than 10kV, or at medium voltage (MV). Enclosure 6a for example comprises a secondary winding 3sa of the transformer 3a arranged in the lower voltage enclosure such that the secondary winding is inductively coupled with the primary winding 3pa arranged in the separate, higher voltage enclosure 5. Secondary winding 3sa may be arranged with a core 15sa or the winding may be arranged without a core. Thus in an embodiment, at least the secondary winding 3sa is arranged with a core 15sa. In another embodiment, at least the secondary winding is not arranged with a core. Secondary winding 3sa is connected to an AC/DC converter 21a which is in turn connected to a DC/AC converter 22a. The converter 22a provides AC power to one or more subsea power loads 4a by means of an insulated conductor that passes through the enclosure 6a wall by means of a bushing or penetrator 9a.

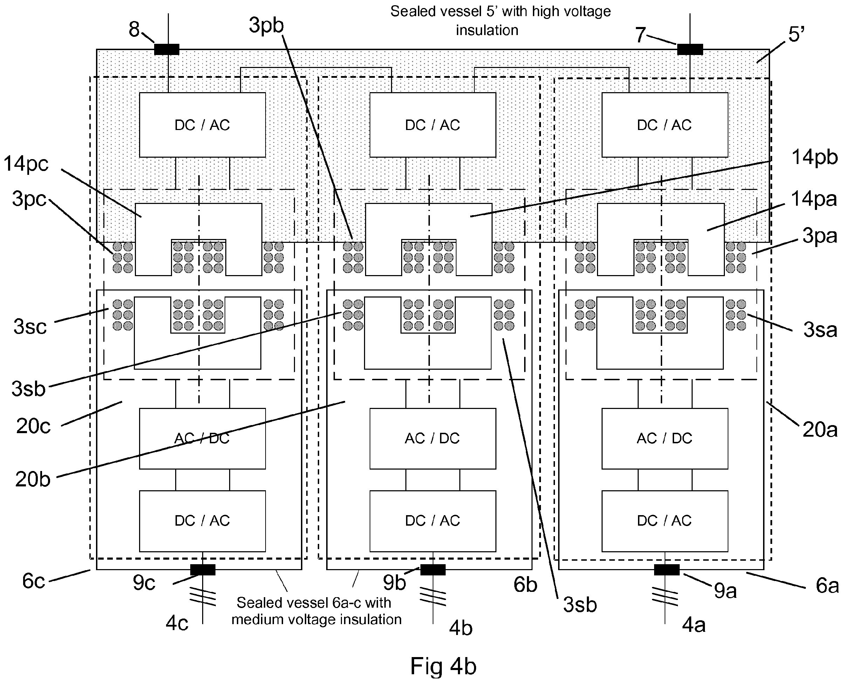

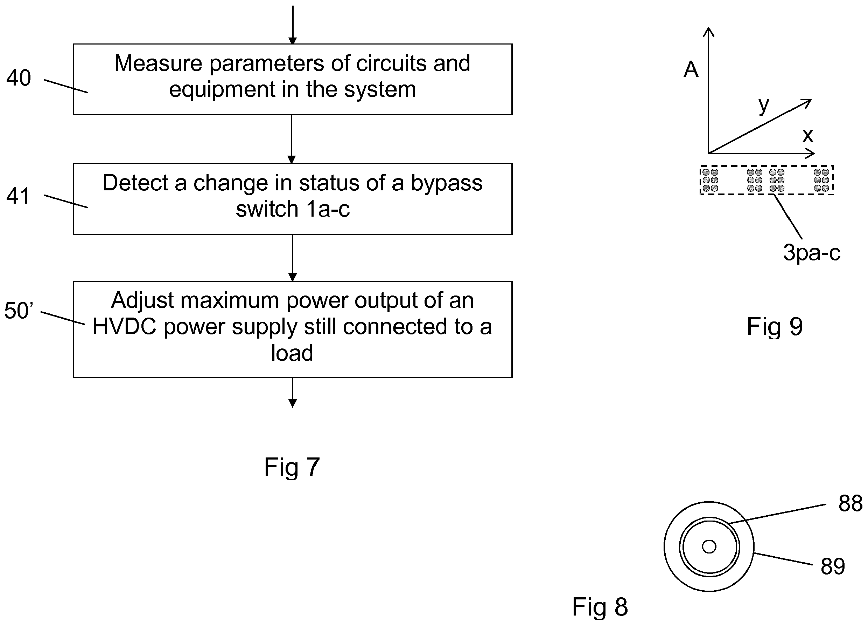

Secondary windings 3sb, 3sc are similarly arranged in separate enclosures 6b, 6c each forming the secondary side of transformers 3a-c and making up the load side of power supplies 20b, 20c. The secondary winding is wound in a plane that is substantially perpendicular to a longitudinal axis A shown as Aa-c in figure 4 (and also in Figures 5-6). The primary winding is also wound in a plane that is substantially perpendicular to the longitudinal axis A. Figure 9 is a schematic representation of a primary winding 3pa-c, shown in cross section in substantially the same way as the primary windings are shown in Figures 4-6. The axis A is shown represented as an axis perpendicular to a horizontal plane x-y in which the primary windings 3pa-c would be lying.

A mechanical arrangement of the proposed topology is illustrated in Figure 4a. A sealed vessel 5 contains all parts that need higher voltage insulation. On the outside of the sealed vessel 5 is seawater. Penetrators 7, 8 are fixed in the enclosure wall to facilitate the connection of the DC-terminal from inside of the vessel to the outside. The vessel may contain a bypass switch (not shown), DC/AC converter 2a-c and part of the transformers 3a-c. A split core transformer arrangement 3a-c is presented in Figure 4a where only the parts of the transformer that needs higher voltage insulation, the primary windings 3pa-c, are contained in the high voltage vessel 5.

The other parts of the split core transformer 3a-c, the secondary windings 3sa-c are arranged to be in part of another enclosure 6a-c containing one or more power supplies to a specific load (or group of loads). The two windings (primary + secondary) must be arranged in close vicinity to reduce leakage fields. The split core arrangement is to in one respect a replacement for the use of traditional subsea penetrators and connectors or wet mateable connectors (penetrators being one of the least reliable and also very costly components in the system). Thus a secondary winding 3sa-c of a transformer 3a-c is arranged inside the second enclosure 6a-c and connected with an insulated bushing device 9a-c or penetrator for accommodating one single electrical power conductor penetrating a wall of the second enclosure, which conductor is connected for supplying at least one phase of an AC supply to one or more subsea loads 4a-c. Only one single penetrator is then used per secondary enclosure 6a-c to conduct power from a secondary winding 3sa-c of a transformer 3a-c to one or more subsea loads 4a-d.

As well as reducing the number of penetrators that have to be used, the connection arrangement with the split core transformers also facilitates a simple connection/disconnection of a given load supply system. The split core design not only simplifies initial construction of the system, this modular power supply and split core approach also facilitates and simplifies replacement, maintenance and upgrading or retrofitting. It should be noted that the separate enclosures 6a-c for the secondary, load side of the power supplies 20a-c do not require to be insulated for higher voltages, or at least not to the extent that the primary side in the higher voltage enclosure 5 has to be insulated. The lower operating voltage in enclosures 6a-c simplifies the technical challenges, reduces some physical dimensions and thereby reduces accompanying costs during construction, handling, maintenance or replacement as well as during updating and/or retrofitting operations.

The HV primary enclosure 5, 5' and the second enclosures 6a-c may be pressure compensated. A passive pressure compensator is preferred, and arranged as part of the enclosure wall and configured to transmit ambient subsea pressure to the inside of the enclosures 5, 6. In this way a pressure difference between ambient subsea pressure and pressure inside the housings 5, 6 may be reduced. The passive pressure compensator (not shown in drawings) may for example be defined by a mechanically flexible portion of the enclosures 5, 6, such as a bellows-shaped part; or by a membrane such as an impermeable membrane. The interior volume of the enclosures 5, 6 and thus the pressure inside the enclosures is hence dependent of the ambient subsea pressure.

Figure 5 shows embodiments of the three power supplies 20a-c supplying power to the one or more loads 4a-c. In Figure 5 the DC/AC converters 2a-c and AC/DC converters 21a-c are illustrated using the conventional symbols for a frequency converter device. The figure shows a power supply 20a arranged, for example, with a capacitor 23a connected in parallel on the power side between the DC power supply and the DC/AC converter 2a. Power supply 20b is arranged with a first capacitor 23a connected in parallel on the power side between the DC power supply and the DC/AC converter 2a; and a second capacitor 23b connected in series between the DC/AC converter 2b and the primary side of the transformer 3b. Power supply 20c is shown arranged with a resistor or an inductor 26 included in series on the power side of the converter 2c, and a capacitor 23c is included connected in parallel between the DC/AC converter and the primary side of transformer 3c. The inclusion of a resistor/inductor facilitates closing of the bypass switch which may be carried out as a two-step closing manoeuvre; alternatively it may be described as soft switching. The secondary windings (secondary side) of transformer 3c is connected to the DC/AC converter 22c as before and the power in the form of multiphase AC is supplied to a motor as subsea power load 4c.

The power loads 4a-d may be used to supply a motor as indicated in Figure 5 or one or more other subsea power loads. These may comprise any of a group of subsea loads such as a: DC/AC frequency converter, electric motor, a power supply; a power supply for: a direct electrical heating circuit, electrically powered actuators, power for adjacent electrical equipment, equipment on a manifold, a Christmas tree or wellhead; an accumulator and/or a UPS; a power supply or charging point for a ROV (Remotely Operated Vehicle). UPS is a common abbreviation for an Uninterruptible Power Supply, a power supply device that which is often arranged with a power storage device comprising a battery, accumulator, capacitor, condensor or super-condenser or similar that can provide an alternative power supply, for a limited time, in the event that a first or grid power supply fails. An outlet of an oil well or of an oil production pipeline is controlled by an assembly of connectors, valves and other devices for controlling the flow of oil and/or gas from the oil well or pipeline. This control assembly is commonly referred to as a Christmas tree in the oil & gas industry.

The various topologies in Figure 5 illustrate devices such as capacitors and a resistor that may be arranged in various circuits to isolate the DC/AC converters 2a-c together with the transformers 3a-c from disturbances on the power side of the modular distribution bus. Various electrical topologies can be used for each power supply connected in series in the HVDC link. Some examples are given in Figure 5. Both voltage source with hard switching or soft switching are shown. Without a capacitor in the circuit it may be called hard switching. When the circuit includes a capacitor such as capacitor 23 b it may be called soft switching. The capacitor 23c and reactor 26 form a resonance circuit and the switching can be carried out during the zero crossings. Additionally, current source type of configurations can be foreseen. A range of other isolated DC/DC converter topologies can also be used.

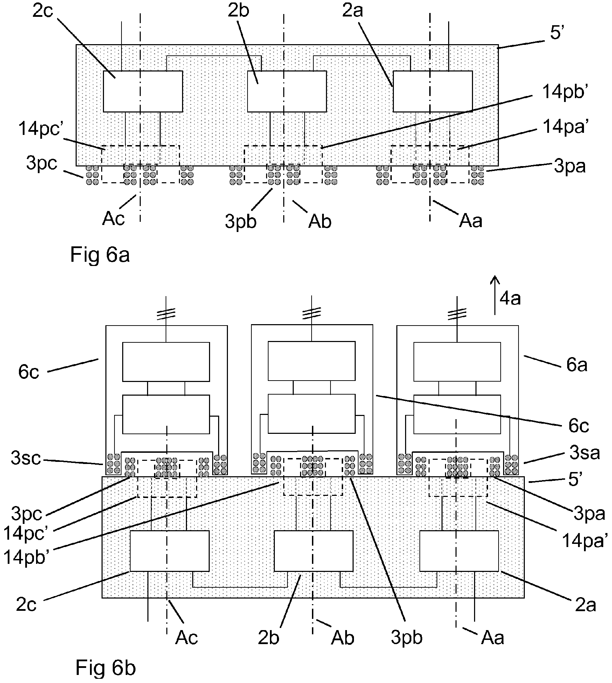

A diagram of a part of a preferred embodiment of the invention is shown in Figure 6a. The figure shows the HV enclosure 5' in a physical arrangement of the modular distribution bus of Figure 1. It shows in particular primary windings connected to an encapsulated DC/AC converter on the primary side wherein the primary windings are arranged outside the encapsulation of the DC/AC converter. Thus one of the primary windings 3pa is arranged on the outside of the enclosure 5' and projects into the space that surrounds enclosure 5'. Similarly primary windings 3pc and 3pb are shown arranged external to enclosure 5'. Each primary winding 3pa-c may be arranged with a core 14pa'-c' or may be arranged without a core.

As previously described the primary windings 3pa-c of the embodiment of Fig 6a are arranged on an outside wall of the first enclosure 5, 5'. An insulated electrical connection between the DC/AC converter 2a and the primary windings 3pa-c of the transformers 3a-c may pass through to wall of the enclosure as insulated cable, insulated busbar or other conductor for connection to the converters. Alternately a primary winding may be arranged fixed in the exterior wall and directly connected inside the enclosure to conductors leading to the converter. The arrangement of a winding protruding through the wall of the enclosure may be arranged in different ways to satisfy insulation requirements for different voltages higher than low voltage.

A development of this embodiment is illustrated in Figure 4b. Figure 4b shows a similar physical arrangement as shown in Figure 4a (described above) with one higher voltage enclosure 5' and three enclosures 6a-c operated at lower voltages. In the embodiment of Fig 4b the primary windings 3pa-c are shown arranged outside the higher voltage enclosure 5' and thus in closer vicinity to the secondary windings 3sa-c arranged in the separate enclosures 6a-c than the primary windings would have been if they were inside the first enclosure. Thus in contrast to Figure 4a, in the embodiment of Fig 4b the primary windings are arranged on the outside wall of enclosure 5'. Also in an embodiment, at least the primary winding 3pa is arranged with a core 14pa. In another embodiment, at least the primary winding is not arranged with a core. Similarly the secondary windings in the embodiment of Figure 4b may be arranged with a core or arranged without a core.

Figure 6b shows a variation of the preferred embodiment of Figure 4b. The figure shows the higher voltage enclosure 5' arranged as a lower part of a structure comprising a MF transformer. Three windings 3pa-c are arranged attached to the outer wall on the upper side of enclosure 5'and projecting upwards in a vertical direction from enclosure 5'. Each of enclosures 6a-c are placed on top of one of the upwardly-projecting primary windings 3pa-c. Thus the primary windings connected to components inside the first enclosure 5' and the secondary windings connected to components inside a second enclosure 6a-c are geometrically placed so that least one primary winding 3pa-c and at least one secondary winding (3sa-c) are arranged both co-axially with each other (aligned about the same axis A or Aa-c) and also with one winding surrounding the other winding; such that the two electric fields resulting from the two windings overlap to a great extent in the windings, and in the cores (if arranged with cores) and in the space around the A axis.

Thus the secondary windings 3sa-c, although contained in a separate enclosure 6a-c, are geometrically arranged in space to surround the primary winding 3pa-c that protrude out of, or project upwards from, the higher voltage enclosure 5'. The secondary windings 3sa-c may surround the primary windings in a co-axial fashion and overlap one another in the axial direction. In other words, the primary and secondary windings are both co-axial and one is surrounded by the other. Thus if the primary windings have a cylindrical or toroidal outer shape then secondary windings with a round cross-section are dimensioned so as to fit over and surround the primary windings with a smaller round cross-section.

In the first place this ensures during operation and use that the positioning of the primary and secondary windings with respect to one another is optimal, so reducing field leakage. Secondly the task of positioning the secondary windings in their separate enclosures optimally with respect to the primary windings projecting from the HV enclosure, for example during construction or maintenance on site, is simplified by the cooperating shapes of the physical arrangements of the primary and secondary windings. The complementary shape of the second enclosures 6a-c easily fits over the smaller shape of the primary winding attached to the outside surface of the enclosure 5'. The distance separating the external primary coil from a secondary coil inside a second enclosure is less than it would be with the primary coil included inside the first enclosure, thus the gap to be bridged by induction is reduced. The cooperating shapes also facilitate positioning the secondary enclosures 6a-c during underwater construction or maintenance operations. Note that Figure 6b, as in Figures 1-2, 4-5 and 6a, is a schematic diagram only. It does not, for example, show any civil works or foundation or other structure for mounting the distribution bus, or any components of the distribution bus, on the seabed.

With the modular topology of Figure 6b the placement of the enclosures 6a-c containing the secondary part of the power supplies 20-c is made much simpler. Maintenance or replacement of the power supplies under water is also facilitated as one or more of the enclosures 6a-c simply have to be lifted vertically upwards to remove them; or simply lowered vertically downwards to replace them in the correct position around the primary winding. In addition, with relative ease the secondary circuits of the power supplies with a first power characteristic may be exchanged for secondary circuits with a secondary power characteristic as the underwater operations progress over time. Alternative forms or shapes of the enclosures 5, 5' and/or 6a-c such as arranging the primary winding to enclose or surround the secondary winding may optionally be used. The shapes or forms of the enclosures 5, 5' and/or 6a-c may also be varied in the event, for example, that the long axes Aa-c of the primary windings and of the secondary windings are arranged such that they are not co-axial. For example primary coils may be arranged in enclosures 5, 5' with long axes Aa-c in a horizontal direction and parallel to the long axes Aa-c of secondary windings lying in a horizontal direction and enclosed in separate enclosures 6a-c; and with enclosure 5, 5' and enclosures 6a-c placed adjacent to minimise field leakage.

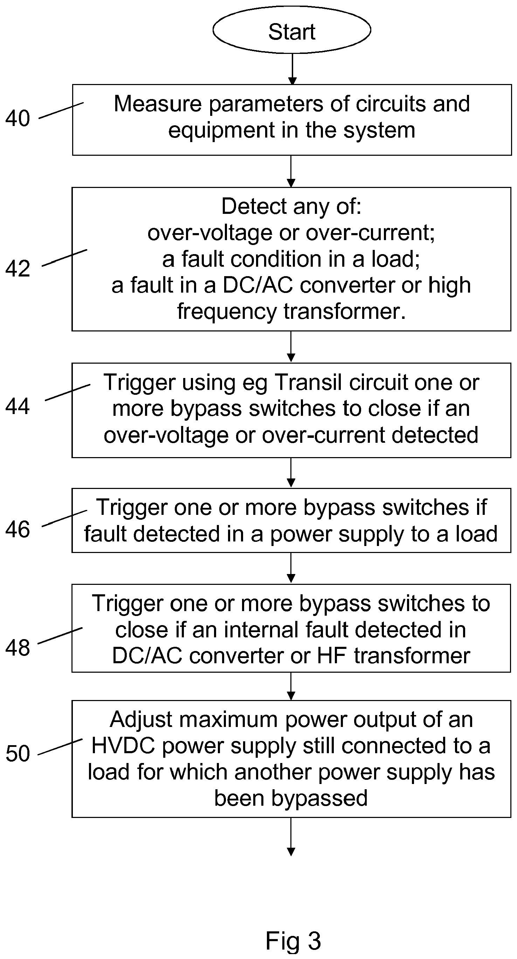

Figure 3 shows a flowchart for a method of operating the invention of Figure 1. The flowchart shows the steps of
40 Measuring parameters of circuits and equipment in the system;
42 Detecting any of: an over-voltage or over-current; a fault condition in a load; a fault in a DC/AC converter 2a-c or medium frequency transformer 3a-c;
44 Triggering, using eg a solid-state switch or a Transil circuit, one or more bypass switches to close if an over-voltage or over-current detected;
46 Alternately triggering one or more bypass switches 1a-c if a fault is detected in a power supply 20a-c to a load 4a-d;
48 Alternately triggering one or more bypass switches 1a-c to close if an internal fault is detected in a DC/AC converter 2a-c or a MF transformer 3a-c.
50 Adjusting maximum power output of a power supply 20a-c still connected to a load 4a-d for which another power supply has been bypassed.

By means of the steps of the above method the frequency converters are protected at least in part from conditions such as over-voltages or over-currents 42, 44; a fault condition in a load 4a-d 42, 46; an internal fault in a DC/AC converter 2a-c or a MF transformer 3a-c, 42, 48. In addition the power output of one or more power supplies 20a-c may be adjusted or increased to compensate for a power supply in which a further part of the power supply has been isolated. For example, referring to Figure 2, if the DC/AC converter 2b was isolated by closing bypass switch 1b due to a fault in the DC/AC converter or elsewhere, then power supply from DC/AC converter 2a may be increased to compensate for the reduction in available power. When more than one power supply is connected to more than one group of subsea loads, as shown in the example of Figure 2, then a degree of power redundancy is provided by the Figure 2 topology and the methods described in reference to Figure 3 and Figure 7 (below).

Figure 7 shows a flowchart for another method of operating the invention of Figure 1 as described by Figure 3. The flowchart shows the steps of:
40 Measuring parameters of circuits and equipment in the system;
41 Detecting a change in status of a bypass switch 1a-c;
50' Adjusting maximum power output of an HVDC power supply still connected to a load 4a-d.

By means of the steps of the above method in Figure 7 the power supply output to one or more loads 4a-d may be adjusted and varied dependent on a bypass switch being switched on or switched off (thereby making a change in status of a bypass switch). In other words the modular power distribution system may be controlled by the step of operating at least one bypass switch 1a-c and disconnecting, or connecting, one or more power supplies 20a-c from, or to a plurality of subsea loads. This change in bypass switch status may be as a result of a fault or over-voltage being detected; or it may be the result of a control action to switch in, or switch out a DC/AC converter 2 and a MF transformer 3 being part of one of the power supplies 20a-c supplying one or more series connected subsea loads; or a combination of those actions. The above methods demonstrate that the modular topology of the subsea distribution system may be quickly adapted to match a change in service conditions.

The methods according to the second aspect of the invention of operating or controlling one or more power supplies 20a-c or devices comprised in the power supplies as described above in reference to Figures 3, 7 and elsewhere in this specification may be carried out by a computer program or computer application comprising computer program elements or software code which, when loaded in a processor or computer, causes the computer or processor to carry out the method steps. The functions operating or controlling one or more power supplies 20a-c may be carried out by processing digital functions, algorithms and/or computer programs and/or by analogue components or analogue circuits or by a combination of both digital and analogue functions. The functions may be implemented using computer hardware or configurable hardware such as a Field-Programmable Gate Array (FPGA) or other types of processors including a Complex Programmable Logic Device (CPLD) or an Application Specific Integrated Circuit (ASIC).

The computer programs are stored at least in part in computer readable memory and as such accessible by the one or more processors. The or each processor may be in a memory storage unit of a distribution system control unit or a local control and protection unit or a PLC (programmable Logic Controller) or other system part thereof, or may as well run in a remote control system topside or onshore. It is to be understood that said computer programs may also be run on one or more general purpose industrial microprocessors or computers instead of one or more specially adapted computers or processors. A part of the computer programs may be stored in a processor as above, but also in a ROM, RAM, PROM, EPROM or EEPROM chip or similar memory means. The program in part or in whole may also be stored on, or in, other suitable computer readable medium such as a magnetic disk, such as a CD (compact disc) or a DVD (digital versatile disc), a Blu Ray disc, hard disk, magneto-optical memory storage means, in volatile memory, in flash memory, as firmware, stored on a data server or on one or more arrays of data servers. Other known and suitable media, including removable memory media such as a USB memory stick or other removable flash memories, hard drives, flash drives etc. may also be used.

Figure 8 shows schematically a data carrier or computer readable medium such as a CD or DVD 89 on which the computer program 88 is stored. As noted above, the computer program product could also be embodied as a memory of a device, such as memory of a local (subsea) control and protection device; or of a control or protection device installed topside or onshore. While the computer program 88 is shown here schematically as a track on the depicted optical disk 89, the computer program can be stored in any way which is suitable for the computer program product.

## Claims

1. A power transmission and distribution system supplying a plurality of subsea loads (4a-d), the system comprising a high voltage DC transmission cable (12) on the power side connected to two or more subsea power supplies (20a-c) each comprising a bypass switch (1a-c) and a first DC/AC converter (2a-c), and a transformer (3a-c), wherein
at least two of the DC/AC converters (2a-c) of the two or more power supplies (20a-c) are arranged in a single first HV enclosure (5, 5') and connected to the two or more subsea loads (4a-d) by said transformers (3a-c) which each comprise a primary winding (3pa-c) and at least one secondary winding (3sac), wherein the primary windings of the at least two transformers are arranged in said single first HV enclosure, wherein each at least one secondary winding (3sa-c) being arranged in a separate second enclosure (6a-c) arranged in close proximity to the primary windings such that the primary and secondary windings are inductively connected to one another, each second enclosure further comprising an AC/DC converter (21a-c) and each second enclosure being insulated configured for operation at a low (LV) or medium voltage (MV), wherein the transformers (3a-c) are operated at a medium frequency MF which is greater than 200Hz and less than 20kHz.

2. The system according to claim 1, **characterised in that** the at least first one DC/AC converter of at least one power supply is arranged to operate at a medium frequency MF greater than 200Hz and less than 20kHz.

3. The system according to claim 1, **characterised in that** the at least one power supply comprises at least one second DC/AC converter (22a-c).

4. The system according to claim 1 or 2, **characterised in that** at least one primary winding connected to a DC/AC converter in the first enclosure (5, 5') and wound in a plane perpendicular to a longitudinal axis (Aa-c) is aligned co-axially with a secondary winding arranged connected to at least one AC/DC converter (21a-c) enclosed in one of the second enclosures.

5. The system according to any one of claims 1-4, **characterised in that** the one or more one primary windings (3pa-c) of the transformer are arranged electrically connected to at least one DC/AC converter inside the first enclosure which one or more one primary windings are arranged on an outside wall of the first enclosure (5, 5').

6. The system according to any one of claims 1-5, **characterised in that** at least one primary winding (3pa-c) and at least one secondary winding (3sa-c) are arranged co-axially with one another such that one winding surrounds the other winding.

7. The system according to claim 1, **characterised in that** two or more power supplies each comprising at least one DC/AC converter (2a-b) and at least one MF transformer (3a-b) are arranged connected to supply one power load (4d) comprising one or more subsea power loads.

8. The system according to claim 1 or 7, **characterised in that** at least one load (4d) of the one or more subsea loads (4a-d) is arranged connectable to more than one of two or more power supplies (20a, 20b) comprising a MF transformer (3a-b) and a DC/AC converter (2a-b).

9. The system according to claim 1, **characterised in that** each secondary winding (3sa-c) of the transformers (3a-c) is connected by means of an insulated bushing device (9a-c) or penetrator accommodating one single electrical power conductor penetrating an external wall of each second enclosure and configured to conduct at least one phase of an AC supply to one or more subsea loads (4a-c).

10. The system according to claim 1, **characterised in that** the bypass switch (1a-c) comprises at least one of: a mechanical by-pass; a solid-state switch, a thyristor by-pass; a combination of both; a mechanical by-pass and a thyristor by-pass connected in parallel.

11. The system according to claim 1 or 10, **characterised in that** the system comprises one or more control or protection circuits configured for operating at least one bypass switch (1a-c) and bypassing one or more power supplies comprising a DC/AC converter (2a-c) and a MF transformer (3a-c) from the HVDC cable (12) supply.

12. The system according to claim 1 or 10, **characterised in that** the system comprises one or more control circuits or triggering (44, 46, 48) mechanisms configured for operating at least one bypass switch (1a-c) when a circuit parameter or condition is detected (42) which is at least one of: an over-voltage or over-current; a cable fault; a fault condition in a load; an fault of a DC/AC converter (2a-c) or a medium frequency transformer (3a-c).

13. The system according to one of claims 1-12, **characterised in that** the first enclosure (5) is a pressure compensated enclosure which comprises at least one of: a DC/AC frequency converter (2a-c), a primary winding (3pa-c), a bypass switch (1a-c).

14. The system according to any previous claim, **characterised by** comprising at least one of: DC/AC frequency converter, electric motor, a power supply, a power supply for: a direct electrical heating circuit; electrically powered actuators; power for adjacent electrical equipment; equipment on a manifold, Christmas tree or wellhead; accumulator and/or UPS.

15. A method for operating a power transmission and distribution system supplying a plurality of subsea loads (4a-d), the system comprising a high voltage DC transmission cable (12) on the power side connected to two or more power supplies (20a-c) each arranged with a bypass switch (la-c) and comprising a DC/AC converter (2a-c) connected in series on the power side, wherein each of the DC/AC converters (2a-c) is connected to a transformer (3a-c) connected to supply one or more subsea power loads (4a-d), wherein
at least two of the DC/AC converters (2a-c) of the two or more power supplies (20a-c) which are arranged in a single first HV enclosure (5, 5') and connected to the one or more subsea loads by said transformers (3a-c), each comprising a primary winding (3pa-c) and at least one secondary winding (3sa-c), wherein the primary windings of the at least two transformers are arranged in said single first HV enclosure, each at least one secondary winding (3sa-c) being arranged in a separate second enclosure (6a-c) arranged in close proximity to the primary windings such that the primary and secondary windings are inductively connected to one another, each separate second enclosure further comprising an AC/DC converter (21a-c) and each separate second enclosure being insulated configured for operation at a low (LV) or medium voltage (MV), wherein the said transformers (3a-c) are configured to operate at a medium frequency (MF) which is greater than 200Hz and less than 20kHz, and wherein one AC/DC converter (21a-c) or AC/DC inverter is arranged inside each separate second enclosure,
the method comprising operating at least one bypass switch (1a-c) and disconnecting, or connecting, one or more power supplies (20a-c) each comprising a DC/AC converter (2a-c) and a MF transformer (3a-c) from or to the HVDC cable (12) supply.

16. A method according to claim 15, **characterised by** the further step of operating or triggering (44, 46, 48) at least one bypass switch (1a-c) when a circuit parameter or condition is detected (42) which indicates at least one of: an over-voltage or over-current; a fault condition in a load; a cable fault; a fault of an DC/AC converter (2a-c) or a MF transformer (3a-c).

17. A method according to claim 15, **characterised by** the further steps of detecting that at least one bypass switch (1a-c) has been operated to close and signalling the closure to a control unit configured for adjusting a voltage or current or voltage and current parameter on the power side of the HVDC cable (12) and thereby adjusting current and voltage input to one or more power supplies comprising a DC/AC converter (2a-c) and a MF transformer (3a-c) connected to one or more power loads.

18. A computer program product for operating a system for electrical power transmission and distribution to a plurality of subsea loads (4a-d), the system comprising a high voltage DC transmission cable (12) on the power side connected to two or more power supplies (20a-c) each arranged with a bypass switch (1a-c) and comprising a DC/AC converter (2a-c) connected in series on the power side, wherein each of the DC/AC converters (2a-c) is connected to a transformer (3a-c) connected to supply one or more subsea power loads (4a-d), wherein at least two of the DC/AC converter (2a-c) of the two or more power supplies (20a-c) which are arranged in a single first HV enclosure (5, 5') and connected to the one or more subsea loads by said transformers (3a-c) each comprising a primary winding (3pa-c) and at least one secondary winding (3sac), wherein one AC/DC converter (21a-c) or AC/DC inverter is arranged inside each separate second enclosure, each at least one secondary winding (3sa-c) being arranged in a separate second enclosure (6a-c) arranged in close proximity to the primary windings such that the primary and secondary windings are inductively connected to one another, each separate second enclosure further comprising an AC/DC converter (21a-c) and each at least one second enclosure being insulated configured for operation at a low (LV) or medium voltage (MV),
wherein the said transformers (3a-c) are configured to operate at a medium frequency (MF) which is greater than 200Hz and less than 100kHz and preferably at a frequency greater than 400Hz and less than 20kHz,
wherein each second enclosure (6a-c) is configured insulated for operation at a low (LV) or medium voltage (MV) and comprises one secondary winding, and the first enclosure and each second enclosure are arranged in close proximity to one another such that the primary windings and the secondary windings are inductively connected to one another, and
wherein one AC/DC converter (21a-c) or AC/DC inverter is arranged inside each second enclosure, said computer program product being provided on a data carrier (89) comprising computer program code (88) configured to cause the control unit to carry out the step of operating at least one bypass switch (la-c) and disconnecting or connecting one or more power supplies comprising a DC/AC converter (2a-c) and a MF transformer (3a-c) from or to the HVDC cable (12) supply.

## Patentansprüche

1. Leistungsübertragungs- und Leistungsverteilungssystem, das mehrere Unterwasserlasten (4a-d) versorgt, wobei das System ein Hochspannungsgleichstromübertragungskabel (12) auf der Leistungsseite, das mit einer oder mehreren Unterwasserstromversorgungen (20a-c) verbunden ist, die jeweils einen Überbrückungsschalter (1a-c) und einen ersten Wechselrichter (2a-c) umfassen, und einen Transformator (3a-c) umfasst, wobei
mindestens zwei der Wechselrichter (2a-c) der zwei oder mehreren Stromversorgungen (20a-c) in einer einzigen ersten HV-Umhüllung (5, 5') angeordnet sind und mit den zwei oder mehreren Unterwasserlasten (4a-d) durch die Transformatoren (3a-c) verbunden sind, die jeweils eine primäre Wicklung (3pa-c) und mindestens eine sekundäre Wicklung (3sa-c) umfassen, wobei die primären Wicklungen der mindestens zwei Transformatoren in einer einzigen ersten HV-Umhüllung angeordnet sind, wobei jede mindestens eine sekundäre Wicklung (3sa-c) in einer getrennten zweiten Umhüllung (6a-c) angeordnet ist, die sehr nahe bei den primären Wicklungen angeordnet ist, so dass die primären und die sekundären Wicklungen miteinander induktiv gekoppelt sind, wobei jede zweite Umhüllung ferner einen Gleichrichter (21a-c) umfasst und jede zweite Umhüllung für einen Betrieb bei einer geringen (LV) oder mittleren Spannung (MV) isoliert konfiguriert ist,
wobei die Transformatoren (3a-c) bei einer mittleren Frequenz MF betrieben werden, die größer als 200 Hz und kleiner als 20 kHz ist.

2. System nach Anspruch 1, **dadurch gekennzeichnet, dass** der mindestens erste eine Wechselrichter mindestens einer Stromversorgung ausgelegt ist, bei einer mittleren Frequenz MF, die größer als 200 Hz und kleiner als 20 kHz ist, zu arbeiten.

3. System nach Anspruch 1, **dadurch gekennzeichnet, dass** die mindestens eine Stromversorgung mindestens einen zweiten Wechselrichter (22a-c) umfasst.

4. System nach Anspruch 1 oder 2, **dadurch gekennzeichnet, dass** mindestens eine primäre Wicklung, die mit einem Wechselrichter in der ersten Umhüllung (5, 5') verbunden ist und in einer Ebene senkrecht zu einer Längsachse (Aa-c) gewickelt ist, koaxial auf eine sekundäre Wicklung ausgerichtet ist, die mit mindestens einem Gleichrichter (21a-c), der in eine der zweiten Umhüllungen eingeschlossen ist, verbunden angeordnet ist.

5. System nach einem der Ansprüche 1-4, **dadurch gekennzeichnet, dass** die eine oder die mehreren primären Wicklungen (3pa-c) des Transformators mit mindestens einem Wechselrichter innerhalb der ersten Umhüllung elektrisch verbunden angeordnet sind, wobei die eine oder die mehreren primären Wicklungen auf einer Außenwand der ersten Umhüllung (5, 5') angeordnet sind.

6. System nach einem der Ansprüche 1-5, **dadurch gekennzeichnet, dass** mindestens eine primäre Wicklung (3pa-c) und mindestens eine sekundäre Wicklung (3sa-c) koaxial zueinander angeordnet sind, so dass eine Wicklung die andere Wicklung umgibt.

7. System nach Anspruch 1, **dadurch gekennzeichnet, dass** zwei oder mehrere Stromversorgungen, die jeweils mindestens einen Wechselrichter (2a-b) umfassen, und mindestens ein MF-Transformator (3a-b) verbunden angeordnet sind, um eine Leistungslast (4d), die eine oder mehrere Unterwasserleistungslasten umfasst, zu versorgen.

8. System nach Anspruch 1 oder 7, **dadurch gekennzeichnet, dass** mindestens eine Last (4d) der einen oder der mehreren Unterwasserlasten (4a-d) mit mehr als einer der zwei oder der mehreren Stromversorgungen (20a, 20b), die einen MF-Transformator (3a-b) und einen Wechselrichter (2a-b) umfassen, verbindbar angeordnet ist.

9. System nach Anspruch 1, **dadurch gekennzeichnet, dass** jede sekundäre Wicklung (3sa-c) der Transformatoren (3a-c) mit Hilfe einer isolierten Buchsenvorrichtung (9a-c) oder eines Eindringkörpers, der einen einzigen elektrischen Leistungsleiter aufnimmt, der eine externe Wand jeder zweiten Umhüllung durchdringt, verbunden ist und konfiguriert ist, mindestens eine Phase einer Wechselstromversorgung an eine oder mehrere Unterwasserlasten (4a-c) zu leiten.

10. System nach Anspruch 1, **dadurch gekennzeichnet, dass** der Überbrückungsschalter (1a-c) mindestens eines der Folgenden umfasst: eine mechanische Überbrückung; einen Festkörperschalter, eine Thyristor-Überbrückung; eine Kombination von beidem; eine mechanische Überbrückung und eine Thyristor-Überbrückung, die parallel geschaltet sind.

11. System nach Anspruch 1 oder 10, **dadurch gekennzeichnet, dass** das System eine oder mehrere Steuer- oder Schutzschaltungen umfasst, die konfiguriert sind, mindestens einen Überbrückungsschalter (1a-c) zu betreiben, und die eine oder die mehreren Stromversorgungen, die einen Wechselrichter (2a-c) und einen MF-Transformator (3a-c) umfassen, von der HVDC-Kabelversorgung (12) zu überbrücken.

12. System nach Anspruch 1 oder 10, **dadurch gekennzeichnet, dass** das System eine oder mehrere Steuerschaltungen oder Auslösemechanismen (44, 46, 48) umfasst, die konfiguriert sind, mindestens einen Überbrückungsschalter (1a-c) zu betreiben, wenn ein Schaltungsparameter oder -zustand detektiert wird (42), der mindestens einer der folgenden ist: eine Überspannung oder ein Überstrom; ein Kabelfehler; ein Fehlerzustand in einer Last; ein Fehler eines Wechselrichters (2a-c) oder eines Transformators mittlerer Frequenz (3a-c).

13. System nach einem der Ansprüche 1-12, **dadurch gekennzeichnet, dass** die erste Umhüllung eine druckkompensierte Umhüllung ist, die mindestens eines der folgenden umfasst: einen DC/AC-Frequenzumsetzer (2a-c), einer primären Wicklung (3pa-c), einen Überbrückungsschalter (1a-c).

14. System nach einem vorhergehenden Anspruch, **dadurch gekennzeichnet, dass** es mindestens eines der folgenden umfasst: einen DC/AC-Frequenzumsetzer, einen Elektromotor, eine Stromversorgung, eine Stromversorgung für: eine direkte elektrische Heizschaltung; elektrisch versorgte Betätigungselemente; eine Leistung für ein benachbartes Elektrogerät; ein Gerät auf einem Verteilerrohr, einen Steigrohrkopf oder Bohrlochkopf; einen Akkumulator und/oder eine UPS.

15. Verfahren zum Betreiben eines Leistungsübertragungs- und Leistungsverteilungssystems, das mehrere Unterwasserlasten (4a-d) versorgt, wobei das System ein Hochspannungsgleichstromübertragungskabel (12) auf der Leistungsseite umfasst, das mit zwei oder mehreren Stromversorgungen (20a-c) verbunden ist, die jeweils mit einem Überbrückungsschalter (Ia-c) angeordnet sind und einen Wechselrichter (2a-c) umfassen, der auf der Leistungsseite in Reihe geschaltet ist, wobei jeder der Wechselrichter (2a-c) mit einem Transformator (3a-c) verbunden ist, der angeschlossen ist, um eine oder mehrere Unterwasserlasten (4a-d) zu versorgen, wobei mindestens zwei der Wechselrichter (2a-c) der zwei oder der mehreren Stromversorgungen (20a-c), die in einer einzigen ersten HV-Umhüllung (5, 5') angeordnet sind und mit der einen oder den mehreren Unterwasserlasten durch die Transformatoren (3a-c) verbunden sind, die jeweils eine primäre Wicklung (3pa-c) und mindestens eine sekundäre Wicklung (3sa-c) umfassen, wobei die primären Wicklungen der mindestens zwei Transformatoren in einer einzigen ersten HV-Umhüllung angeordnet sind, wobei jede mindestens eine sekundäre Wicklung (3sa-c) in einer getrennten zweiten Umhüllung (6a-c) angeordnet ist, die sehr nahe bei den primären Wicklungen angeordnet ist, so dass die primären und die sekundären Wicklungen miteinander induktiv gekoppelt sind, wobei jede getrennte zweite Umhüllung ferner einen Gleichrichter (21a-c) umfasst und jede getrennte zweite Umhüllung für einen Betrieb bei einer geringen (LV) oder einer mittleren Spannung (MV) isoliert konfiguriert ist,
wobei die Transformatoren (3a-c) konfiguriert sind, bei einer mittleren Frequenz (MF) zu arbeiten, die größer als 200 Hz und kleiner als 20 kHz ist und wobei ein Gleichrichter (21a-c) oder ein Wechselspannungs/Gleichspannungs-Wandler innerhalb jeder getrennten zweiten Umhüllung angeordnet ist,
wobei das Verfahren umfasst, mindestens einen Überbrückungsschalter (1a-c) zu betreiben und eine oder mehrere Stromversorgungen (20a-c), die jeweils einen Wechselrichter (2a-c) und einen MF-Transformator (3a-c) umfassen, von der HVDC-Kabelversorgung (12) zu trennen oder mit ihr zu verbinden.

16. Verfahren nach Anspruch 15, **gekennzeichnet durch** den weiteren Schritt, mindestens einen Überbrückungsschalter (1a-c) zu betreiben oder auszulösen (44, 46, 48), wenn ein Schaltungsparameter oder -zustand detektiert wird (42), der mindestens eines der folgenden angibt: eine Überspannung oder einen Überstrom; einen Fehlerzustand in einer Last; einen Kabelfehler; einen Fehler eines Wechselrichters (2a-c) oder eines MF-Transformators (3a-c).

17. Verfahren nach Anspruch 15, **gekennzeichnet durch** die weiteren Schritte, zu detektieren, dass mindestens ein Überbrückungsschalter (1a-c) betrieben wurde, um zu schließen, und das Schließen einer Steuereinheit zu signalisieren, die konfiguriert ist, eine Spannung oder einen Strom oder einen Spannungs- und einen Stromparameter auf der Leistungsseite des HVDC-Kabels (12) anzupassen und **dadurch** einen Strom und eine Spannung, die in eine oder mehrere Stromversorgungen, die einen Wechselrichter (2a-c) und einen MF-Transformator (3a-c) umfassen, der mit einer oder mehreren Leistungslasten verbunden ist, eingegeben werden, anzupassen.

18. Computerprogrammprodukt zum Betreiben eines Systems für eine elektrische Leistungsübertragung und -verteilung an mehrere Unterwasserelasten (4a-d), wobei das System ein Hochspannungsgleichstromübertragungskabel (12) auf der Leistungsseite umfasst, das mit zwei oder mehreren Stromversorgungen (20a-c) verbunden ist, die jeweils mit einem Überbrückungsschalter (1a-c) angeordnet sind und einen Wechselrichter (2a-c) umfassen, der auf der Leistungsseite in Reihe geschaltet ist, wobei jeder der Wechselrichter (2a-c) mit einem Transformator (3a-c) verbunden ist, der angeschlossen ist, um eine oder mehrere Unterwasserleistungslasten (4a-d) zu versorgen, wobei mindestens zwei der Wechselrichter (2a-c) der zwei oder der mehreren Leistungsversorgungen (20a-c), die in einer einzigen ersten HV-Umhüllung (5, 5') angeordnet sind und mit der einen oder den mehreren Unterwasserlasten durch die Transformatoren (3a-c) verbunden sind, die jeweils eine primäre Wicklung (3pac) und mindestens eine sekundäre Wicklung (3sa-c) umfassen, wobei ein Gleichrichter (21a-c) oder ein Wechselspannungs/Gleichspannungs-Wandler innerhalb jeder getrennten zweiten Umhüllung angeordnet ist, wobei jede mindestens eine sekundäre Wicklung (3sa-c), die in einer getrennten zweiten Umhüllung angeordnet ist, in dichter Nähe zu den primären Wicklungen angeordnet ist, so dass die primären und die sekundären Wicklungen miteinander induktiv gekoppelt sind, wobei jede getrennte zweite Umhüllung ferner einen Gleichrichter (21a-c) umfasst und jede mindestens eine zweite Umhüllung für einen Betrieb bei einer geringen (LV) oder einer mittleren Spannung (MV) isoliert konfiguriert ist,
wobei die Transformatoren (3a-c) konfiguriert sind, bei einer mittleren Frequenz (MF), die größer als 200 Hz und kleiner als 100 kHz ist und vorzugsweise bei einer Frequenz, die größer als 400 Hz und kleiner als 20 kHz ist, zu arbeiten,
wobei jede zweite Umhüllung (6a-c) für einen Betrieb bei einer geringen (LV) oder einer mittleren Spannung (MV) isoliert konfiguriert ist und eine sekundäre Wicklung umfasst und die erste Umhüllung und jede zweite Umhüllung in dichter Nähe zueinander angeordnet sind, so dass die primären Wicklungen und die sekundären Wicklungen induktiv miteinander gekoppelt sind, und
wobei ein Gleichrichter (21a-c) oder ein Wechselspannungs/Gleichspannungs-Wandler innerhalb jeder zweiten Umhüllung angeordnet ist, wobei das Computerprogrammprodukt auf einem Datenträger (89) geliefert wird, das Computerprogrammcode (88) umfasst, der konfiguriert ist, zu bewirken, dass die Steuereinheit den Schritt des Betreibens mindestens eines Überbrückungsschalters (Ia-c) und des Trennens einer oder mehrerer Stromversorgungen, die einen Wechselrichter (2a-c) und einen MF-Transformator (3a-c) umfassen, von einer HVDC-Kabelversorgung (12) oder des Verbindens mit dieser ausführt.

## Revendications

1. Système de transmission et distribution d'énergie alimentant une pluralité de charges sous-marines (4a-d), le système comprenant un câble de transmission CC haute tension (12) du côté alimentation relié à au moins deux alimentations sous-marines (20a-c) comprenant chacune un commutateur de dérivation (1a-c) et un premier convertisseur CC/CA (2a-c), et un transformateur (3a-c), dans lequel
au moins deux des convertisseurs CC/CA (2a-c) des au moins deux alimentations (20a-c) sont disposés dans un unique premier coffret HT (5, 5') et reliés aux au moins deux charges sous-marines (4a-d) par lesdits transformateurs (3a-c) qui comprennent chacun un enroulement primaire (3pa-c) et au moins un enroulement secondaire (3sa-c), les enroulements primaires des au moins deux transformateurs étant disposés dans ledit unique premier coffret HT, chaque au moins un enroulement secondaire (3sa-c) étant disposé dans un deuxième coffret distinct (6a-c) disposé à proximité étroite des enroulements primaires de telle sorte que les enroulements primaires et secondaires sont reliés par induction les uns aux autres, chaque deuxième coffret comprenant en outre un convertisseur CA/CC (21a-c) et chaque deuxième coffret étant configuré isolé pour un fonctionnement à basse (BT) ou moyenne tension (MT),
les transformateurs (3a-c) fonctionnant à une fréquence moyenne FM qui est supérieure à 200 Hz et inférieure à 20 kHz.

2. Système selon la revendication 1, **caractérisé en ce que** l'au moins un premier convertisseur CC/CA d'au moins une alimentation est agencé pour fonctionner à une fréquence moyenne FM supérieure à 200 Hz et inférieure à 20 kHz.

3. Système selon la revendication 1, **caractérisé en ce que** l'au moins une alimentation comprend au moins un deuxième convertisseur CC/CA (22a-c).

4. Système selon la revendication 1 ou 2, **caractérisé en ce qu'**au moins un enroulement primaire relié à un convertisseur CC/CA dans le premier coffret (5, 5') et enroulé dans un plan perpendiculaire à un axe longitudinal (Aa-c) est aligné coaxialement avec un enroulement secondaire agencé relié à au moins un convertisseur CA/CC (21a-c) contenu dans un des deuxièmes coffrets.

5. Système selon l'une quelconque des revendications 1 à 4, **caractérisé en ce que** le ou les enroulements primaires (3pa-c) du transformateur sont agencés reliés électriquement à au moins un convertisseur CC/CA à l'intérieur du premier coffret, lequel ou lesquels enroulements primaires sont disposés sur une paroi extérieure du premier coffret (5, 5').

6. Système selon l'une quelconque des revendications 1 à 5, **caractérisé en ce qu'**au moins un enroulement primaire (3pa-c) et au moins un enroulement secondaire (3sa-c) sont disposés coaxialement l'un avec l'autre de telle sorte qu'un enroulement entoure l'autre enroulement.

7. Système selon la revendication 1, **caractérisé en ce qu'**au moins deux alimentations comprenant chacune au moins un convertisseur CC/CA (2a-b) et au moins un transformateur FM (3a-b) sont agencées reliées pour alimenter une charge d'énergie (4d) comprenant une ou plusieurs charges d'énergie sous-marines.

8. Système selon la revendication 1 ou 7, **caractérisé en ce qu'**au moins une charge (4d) de la ou des charges sous-marines (4a-d) est agencée raccordable à plusieurs d'au moins deux alimentations (20a, 20b) comprenant un transformateur FM (3a-b) et un convertisseur CC/CA (2a-b).

9. Système selon la revendication 1, **caractérisé en ce que** chaque enroulement secondaire (3sa-c) des transformateurs (3a-c) est relié au moyen d'un dispositif de traversée isolé (9a-c) ou d'un pénétrateur accueillant un unique conducteur d'énergie électrique pénétrant dans une paroi externe de chaque deuxième coffret et configuré pour conduire au moins une phase d'une alimentation CA jusqu'à une ou plusieurs charges sous-marines (4a-c).

10. Système selon la revendication 1, **caractérisé en ce que** le commutateur de dérivation (1a-c) comprend au moins un élément parmi : une dérivation mécanique ; un commutateur à semi-conducteurs, un commutateur à thyristor ; une combinaison des deux ; une dérivation mécanique et une dérivation à thyristor reliées en parallèle.

11. Système selon la revendication 1 ou 10, **caractérisé en ce que** le système comprend un ou plusieurs circuits de commande ou de protection configurés pour faire fonctionner au moins un commutateur de dérivation (1a-c) et dériver une ou plusieurs alimentations comprenant un convertisseur CC/CA (2a-c) et un transformateur FM (3a-c) depuis l'alimentation par câble CC HT (12).

12. Système selon la revendication 1 ou 10, **caractérisé en ce que** le système comprend un ou plusieurs circuits de commande ou mécanismes de déclenchement (44, 46, 48) configurés pour faire fonctionner au moins un commutateur de dérivation (1a-c) quand est détecté un paramètre ou état de circuit (42) qui en est au moins un des suivants : une surtension ou une surintensité ; un défaut de câble ; un état défectueux dans une charge ; un défaut d'un convertisseur CC/CA (2a-c) ou d'un transformateur moyenne fréquence (3a-c).

13. Procédé selon une des revendications 1 à 12, **caractérisé en ce que** le premier coffret (5) est un coffret à compensation de pression qui comprend au moins un des éléments suivants : un convertisseur de fréquence CC/CA (2a-c), un enroulement primaire (3pa-c), un commutateur de dérivation (1a-c).

14. Système selon une quelconque revendication précédente, **caractérisé en ce qu'**il comprend au moins un des éléments suivants : un convertisseur de fréquence CC/CA, un moteur électrique, une alimentation, une alimentation pour : un circuit de chauffage électrique direct ; des actionneurs à commande électrique ; de l'énergie pour un équipement électrique adjacent ; un équipement sur un collecteur, un arbre de Noël ou une tête de puits ; un accumulateur et/ou une alimentation sans coupure.

15. Procédé de fonctionnement d'un système de transmission et distribution d'énergie alimentant une pluralité de charges sous-marines (4a-d), le système comprenant un câble de transmission CC haute tension (12) du côté alimentation relié à au moins deux alimentations (20a-c), chacune agencée avec un commutateur de dérivation (1a-c) et comprenant un convertisseur CC/CA (2a-c) relié en série du côté alimentation, chacun des convertisseurs CC/CA (2a-c) étant relié à un transformateur (3a-c) relié pour alimenter une ou plusieurs charges d'énergie sous-marines (4a-d), dans lequel
au moins deux des convertisseurs CC/CA (2a-c) des au moins deux alimentations (20a-c) qui sont disposés dans un unique premier coffret HT (5, 5') et reliés à la ou aux charges sous-marines par lesdits transformateurs (3a-c), chacun comprenant un enroulement primaire (3pa-c) et au moins un enroulement secondaire (3sa-c), les enroulements primaires des au moins deux transformateurs étant disposés dans ledit unique premier coffret HT, chaque au moins un enroulement secondaire (3sa-c) étant disposé dans un deuxième coffret distinct (6a-c) disposé à proximité étroite des enroulements primaires de telle sorte que les enroulements primaires et secondaires sont reliés par induction les uns aux autres, chaque deuxième coffret distinct comprenant en outre un convertisseur CA/CC (21a-c) et chaque deuxième coffret distinct étant configuré isolé pour un fonctionnement à basse (BT) ou moyenne tension (MT),
lesdits transformateurs (3a-c) étant configurés pour fonctionner à une fréquence moyenne (FM) qui est supérieure à 200 Hz et inférieure à 20 kHz, et un convertisseur CA/CC (21a-c) ou inverseur CA/CC étant disposé à l'intérieur de chaque deuxième coffret distinct,
le procédé comprenant le fonctionnement d'au moins un commutateur de dérivation (1a-c) et la déconnexion ou la connexion d'une ou plusieurs alimentations (20a-c) comprenant chacune un convertisseur CC/CA (2a-c) et un transformateur FM (3a-c) de ou à l'alimentation par câble CC HT (12).

16. Procédé selon la revendication 15, **caractérisé par** l'étape supplémentaire de fonctionnement ou déclenchement (44, 46, 48) d'au moins un commutateur de dérivation (1a-c) quand est détecté un paramètre ou état de circuit (42) qui indique au moins un des éléments suivants : une surtension ou une surintensité ; un état défectueux dans une charge ; un défaut de câble ; un défaut d'un convertisseur CC/CA (2a-c) ou d'un transformateur FM (3a-c).

17. Procédé selon la revendication 15, **caractérisé par** les étapes supplémentaires de détection qu'au moins un commutateur de dérivation (1a-c) a été actionné pour se fermer et signalisation de la fermeture à une unité de commande configurée pour régler une tension ou une intensité ou un paramètre de tension ou d'intensité du côté alimentation du câble CC HT (12) et régler ainsi l'entrée de courant et de tension d'une ou plusieurs alimentations comprenant un convertisseur CC/CA (2a-c) et un transformateur FM (3a-c) reliées à une ou plusieurs charges d'énergie.

18. Produit-programme informatique destiné à faire fonctionner un système de transmission et distribution d'énergie électrique à une pluralité de charges sous-marines (4a-c), le système comprenant un câble de transmission CC haute tension (12) du côté alimentation relié à au moins deux alimentations (20a-c), chacune agencée avec un commutateur de dérivation (1a-c) et comprenant un convertisseur CC/CA (2a-c) relié en série du côté alimentation, dans lequel chacun des convertisseurs CC/CA (2a-c) est relié à un transformateur (3a-c) relié pour alimenter une ou plusieurs charges d'énergie sous-marines (4a-d), dans lequel au moins deux des convertisseurs CC/CA (2a-c) des au moins deux alimentations (20a-c) qui sont disposés dans un unique premier coffret HT (5, 5') et reliés à la ou aux charges sous-marines par lesdits transformateurs (3a-c) comprenant chacun un enroulement primaire (3pa-c) et au moins un enroulement secondaire (3sa-c), dans lequel un convertisseur CA/CC (21a-c) ou inverseur CA/CC est disposé à l'intérieur de chaque deuxième coffret distinct, chaque au moins un enroulement secondaire (3as-c) étant disposé dans un deuxième coffret distinct (6a-c) disposé à proximité étroite des enroulements primaires de telle sorte que les enroulements primaires et secondaires sont reliés par induction les uns aux autres, chaque deuxième coffret distinct comprenant en outre un convertisseur CA/CC (21a-c) et chaque au moins un deuxième coffret distinct étant configuré isolé pour un fonctionnement à basse (BT) ou moyenne tension (MT),
dans lequel lesdits transformateurs (3a-c) sont configurés pour fonctionner à une fréquence moyenne (FM) qui est supérieure à 200 Hz et inférieure à 100 kHz et de préférence à une fréquence supérieure à 400 Hz et inférieure à 20 kHz,
dans lequel chaque deuxième coffret (6a-c) est configuré isolé pour un fonctionnement à basse (BT) ou moyenne tension (MT) et comprend un enroulement secondaire, et le premier coffret et chaque deuxième coffret sont disposés à proximité étroite l'un de l'autre de telle sorte que les enroulements primaires et les enroulements secondaires sont reliés par induction les uns aux autres, et
dans lequel un convertisseur CA/CC (21a-c) ou inverseur CA/CC est disposé à l'intérieur de chaque deuxième coffret, ledit produit-programme informatique étant fourni sur un support de données (89) comprenant un code de programme informatique (88) configuré pour faire en sorte que l'unité de commande réalise l'étape de fonctionnement d'au moins un commutateur de dérivation (1a-c) et de déconnexion ou connexion d'une ou plusieurs alimentations comprenant un convertisseur CC/CA (2a-c) et un transformateur FM (3a-c) de ou à l'alimentation par câble CC HT (12).
